# EUROPEAN PATENT SPECIFICATION

(11) **EP 3 723 063 B1**
(45) Date of publication and mention of the grant of the patent: **26.03.2025**
(21) Application number: 19167811.9
(22) Date of filing: 08.04.2019
(51) Int. Cl.: G08G 1/0962, G08G 1/01, G08G 1/0967

(54) **METHOD; APPARATUS; COMPUTER PROGRAM AND CLOUD SERVICE FOR DETERMINING TRAFFIC RULES**
METHODE; VORRICHTUNG; COMPUTERPROGRAMM UND CLOUD-SERVICE ZUR BESTIMMUNG VON VERKEHRSREGELN
PROCÉDÉ, APPAREIL, PROGRAMME INFORMATIQUE ET SERVICE EN NUAGE POUR DETERMINER DES RÈGLES DE CIRCULATION

(43) Date of publication of application: 14.10.2020
(73) Proprietor: Ningbo Geely Automobile Research & Development Co. Ltd., Hangzhou Bay New District Ningbo, Zhejiang 315336 (CN)
(72) Inventor: LINDBERG NILSSON, Erik, 417 47 Göteborg (SE); HAGSTRÖM, Albin, 415 13 Göteborg (SE)
(74) Representative: Zacco Sweden AB

(56) References cited:
- EP-A1- 2 594 461
- EP-A1- 3 462 428
- EP-A1- 3 550 538
- WO-A1-2015/134311
- WO-A1-2018/101264
- DE-A1- 102013 211 632
- DE-A1- 102016 201 249
- DE-A1- 102016 224 574
- DE-A1- 102017 007 118
- DE-A1- 102017 217 169
- US-A1- 2012 173 530
- US-A1- 2017 308 759

## Description

### TECHNICAL FIELD

The present invention relates generally to the field of road sign indicating a traffic instruction at an area. More particularly, it relates to predicting or estimating the traffic instructions at an area.

### BACKGROUND

An objective of road signs may typically be to instruct or inform a user of a vehicle of the traffic rules or a traffic instruction at an area. A road sign is often a picture that is describing the instructions that is valid at the area and the user of a vehicle learns the meaning of a road sign when taking the driving license or similar.

Understanding traffic instructions of road signs in foreign countries can be difficult and even more difficult if the road sign comprise text in a foreign language that the user don't know. Understanding the instructions of combinations of road signs can also be hard in some cases. Prior art traffic sign assist systems are focused on translating the text identified on the road signs and translate the meaning of the text on the road signs. Even the most sophisticated traffic sign assist systems have a problem of interpreting the instructions of a road sign unless the user or the system understands the language the text is written in.

Understanding traffic instructions of combination of road signs are even more difficult.

In areas where the driver of a vehicle is unfamiliar with the road signs and the instructions given, there is thus a need for alternative approaches to assist the driver to understand the traffic rules or instructions by predicting or estimating the traffic instructions of a road sign.

The document DE102017217169 discloses a method for automatic identification of parking spaces and non parking spaces.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to the traffic instructions/rules that are valid for an area.

An object of some embodiments is to provide alternative approaches to understand instructions on road signs to understand the traffic instructions/rules that are valid for an area.

According to a first aspect, this is achieved by a method for estimating a traffic instruction at a first area.

The method comprises detecting positions and/or movements of at least one vehicle in a second area associated with a corresponding traffic instruction as the first area.

The method further comprises determining a behaviour pattern based on the detected positions and/or movements of the at least one vehicle. The behaviour pattern is estimated based on how long and when the at least one vehicle is standing still in the second area.

The method further comprises estimating the traffic instructions of the first area based on the determined behaviour pattern.

An advantage of some embodiments is an alternative approach to understanding the traffic instructions of the first area is provided.

An advantage of some embodiments is that information from different areas, i.e. first and second areas, with the same traffic instruction could be crowdsourced to estimating the traffic instruction. An advantage of this is that the traffic instructions for areas having a low amount/number of moving vehicles could be estimated if there is another area with the corresponding traffic instruction.

Another advantage of some embodiments is that the estimation of the traffic instruction of the area is based on how actual vehicles move in the second area and not of an interpretation or a translation of a road sign.

Yet an advantage of some embodiments is that the estimation of the traffic instruction is provided even for environments with road signs that give no meaning, even if the text as such is interpreted or translated to an understandable language. There are road signs that are hard to understand, as they are local signs.

Yet another advantage of some embodiments is a method that is non-dependent of translating the text of the road sign is provided.

By corresponding traffic instruction is meant that similar or the same traffic instructions are valid for the different areas.

According to an aspect the method comprises the step of receiving the estimated traffic instructions of the first area in a further vehicle entering the first area. An advantage of this is that a user of a vehicle entering the first area obtains information regarding the traffic instructions for the first area without any need of understanding the road signs at the first area.

According to an aspect the step of detecting comprises scanning the second area by one or more sensors.

According to an aspect the first and/or second area is a parking area. According to an aspect the area is an area that corresponds to an area for which road signs is used to define the traffic instructions.

According to an aspect the step of determining comprises analysing the detected positions and/or movements of the at least one vehicle in the cloud.

According to an aspect the step of estimating the traffic instructions of the first area comprises the step of analysing the determined behaviour pattern in the cloud.

By determining and analysing information in the cloud the advantages of that the ability to handle large amounts of information does not need to be processes in every vehicle.

According to an aspect the method further comprises detecting one or more of a road sign, a road, traffic lanes, markings on the road and the step of estimating the traffic instructions is further based on the detected one or more road signs, road, traffic lanes and/or signs on the road. An advantage of the aspect is that the information provides more data for identifying patterns in the areas.

According to an aspect the method further comprises the step of displaying the estimated traffic instruction of the first area in the further vehicle. An advantage of some aspects is that the driving of the vehicle may be adapted according to the estimated traffic instructions the area without understanding any road signs as such.

According to an aspect the method further comprises the step of receiving the estimated traffic instruction of the first area in an autonomous driving system of the further vehicle.

According to an aspect the estimated traffic instructions of the first area comprises a parking instruction to assist the user of the further vehicle or the autonomous driving system to obey the traffic instructions of the first area.

According to an aspect the scanning of the area comprises scanning one or more of parked vehicles in the second area. An advantage of the aspect is that the information provides data for training the modelling of the traffic conditions and competing flows of traffic in identifying behaviour patterns to estimate meaning of many different types of traffic instructions at the first and/or second areas.

According to an aspect, the detecting and/or scanning comprises any one of detecting and/or scanning as the vehicle approaches or enters the second area, as the vehicle passes the second area, and as the vehicle has passed the second area.

An advantage of some embodiments is that the detecting and/or scanning provides data at different points in time and at different positions in the second area for further training the modelling of the traffic instructions, the traffic conditions and competing flows of traffic and identify behaviour pattern(s).

According to an aspect the method further comprises sending a continuous stream of detected and/or scanned information to the cloud in response to the detection and/or scanning of the second area.

An advantage of some aspects is that the continuous information provides a non-interrupted stream of data for a more correct training of the modelling/estimating of the traffic instructions at the first area and traffic conditions and competing flows of traffic of the first and/or second areas.

According to an aspect the estimated traffic instruction of the first area comprises a parking instruction to assist the user of the vehicle to obey the traffic rules at the first area.

An advantage of some aspect is that the driving of the further vehicle may be adapted to the traffic instructions of the firs area and thereby obey the traffic instructions in the first area.

According to an aspect the method comprises analysing the road sign information in the cloud and wherein the step of estimating the traffic instruction of the first area is further based on the analysis of the road sign information. An advantage of some aspects is that the estimation of the traffic instructions could be a combination of data from the detecting and/or scanning and the road signs to even further increase the accuracy of the estimation of the traffic instructions for the area.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for estimating the traffic instructions at the area.

The apparatus comprises a memory comprising executable instructions and one or more processors configured to communicate with the memory.

The one or more processors are configured to cause the apparatus to detect positions and/or movements of at least one vehicle in the first area or in a second area associated with a corresponding traffic instruction as the first area.

The one or more processors are further configured to cause the apparatus to determine a behaviour pattern based on the detected positions and/or movements of the at least one vehicle, and estimate the traffic instructions of the first area based on the determined behaviour pattern.

An advantage of some embodiments and aspect is an alternative approach to understanding the traffic instructions in the first area are provided
Another advantage of some embodiments is that the estimation of the traffic instruction of the first area is based on how actual vehicles move in the second area.

Yet an advantage of some embodiments is that an estimated traffic instruction is provided even for a first area with road signs that give no meaning, even if the text as such is translated to an understandable language. There are road signs that are hard to understand, as they are local signs.

Yet another advantage of some embodiments is that a non-dependence of translating the text of the road sign is provided.

A fourth aspect is a vehicle comprising the apparatus of the third aspect.

An advantage of some embodiments is that alternative approaches to understanding the traffic instructions at an area are provided.

A fifth aspect is a cloud service for estimating a traffic instruction at the area.

The cloud service comprises controlling circuitry configured to receive detected positions and/or movements of at least one vehicle in a second area associated with a corresponding traffic instruction as the first area, determining a behaviour pattern based on the detected positions and/or movements of the at least one vehicle, and estimating the traffic instructions of the first area based on the determined behaviour pattern. An advantage of some embodiments is that an alternative approach to understanding the traffic instructions for an area are provided.

Another advantage of some embodiments is that the estimate of the traffic instruction of the area is based on how actual vehicles move in the area and not on a translation of a road sign.

Yet an advantage of some embodiments is that an estimated traffic instruction is provided even for environments with road signs that give no meaning, even if the text as such is translated to an understandable language. There are road signs that are hard to understand, as they are local signs.

Yet another advantage of some embodiments is that a non-dependence of translating the text of the road sign is provided.

According to an aspect the controlling circuitry of the cloud service is further configured to: provide a recommended velocity, driving direction, a parking instruction, non-driving direction, a maximum height, maximum weight, bridge opening, pedestrian street, bus lane, carpool lane, no-passing zone, tolls, speeding camera, and specific rules for specific lanes to a user of a vehicle or an autonomous driving vehicle to assist to obey the traffic instructions of the first area.

A sixth aspect is a system for estimating traffic instructions of a first area.

The system comprises a scanning module configured to scan a second area, a transmitting module configured to send a continuous stream of scanning information, an analysis module configured to analyse the scanning information, a estimating module configured to predict an traffic instructions at the first area based on the analysis of the scanning information, a receiving module configured to receive the estimated instruction of the first area, and a display module configured to display the estimated traffic instruction of the first area.

An advantage of some embodiments is that alternative approaches to understanding the traffic instructions of the first area are provided.

Another advantage of some embodiments is that the estimation of the traffic instruction of the first area is based on how actual vehicles move in the second area.

Yet an advantage of some embodiments is that an estimate of the traffic instruction is provided even for environments with road signs that give no meaning, even if the text as such is translated to an understandable language. There are road signs that are hard to understand, as they are local signs.

Yet another advantage of some embodiments is that a non-dependence of translating text of any road sign is provided.

According to an aspect the receiving module is further configured to receive one or more of a recommended velocity, driving direction, parking instructions, and non-driving direction to assist the user of the vehicle to obey the traffic rules.

In some embodiments, any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments and aspect;
Figure 2 is a schematic overview illustrating an example system according to an aspect;
Figure 3a is a schematic drawing illustrating an example of a first and second area according to an aspect;
Figure 3b is a schematic drawing illustrating an example of a first and second area according to an aspect;
Figure 4 is a schematic block diagram illustrating an example arrangement according to an apsect; and
Figure 5 is a schematic drawing illustrating an example computer readable medium according to an aspect.
Figure 6 is a flowchart illustrating example steps of a cloud service according to some embodiments and aspect;

### DETAILED DESCRIPTION

The invention is set out in the appended set of claims.

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments and aspects of the present disclosure will be described and exemplified more fully hereinafter with reference to the accompanying drawings. The solutions disclosed herein can, however, be realized in many different forms and should not be construed as being limited to the embodiments set forth herein.

In the following, embodiments and aspect will be described where alternative approaches to interpret, predict or estimate the traffic instructions of an area is provided. Further, embodiments and aspect will be described where alternative approaches to interpret, predict or estimate the traffic instructions of an area based on analysing movements of vehicles and persons in an area having the same or similar traffic instructions.

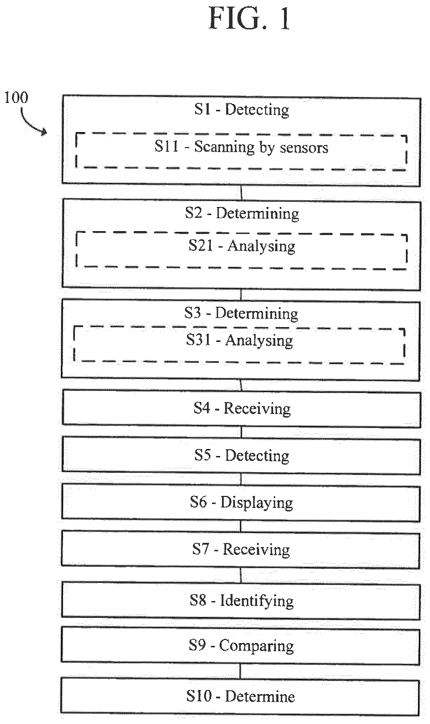

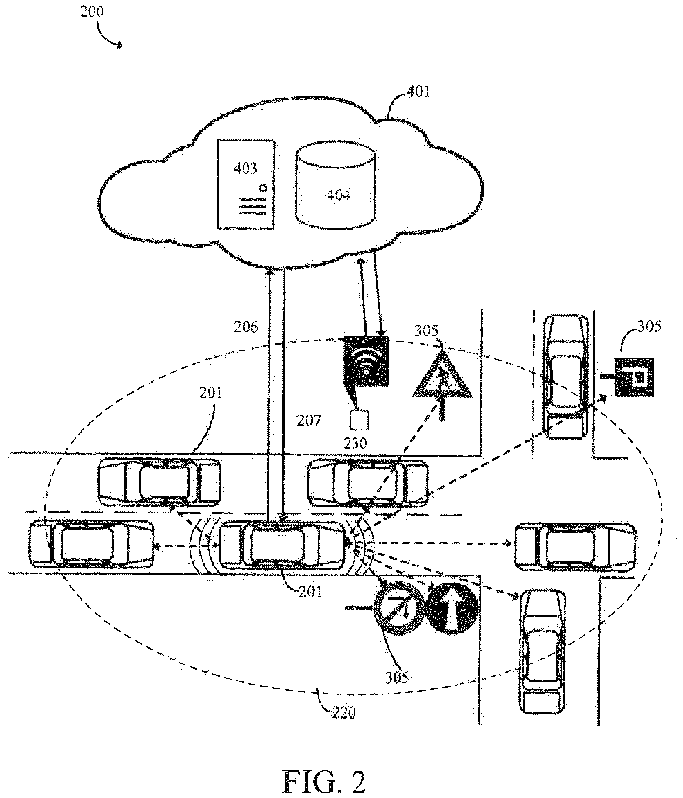

Figure 1 is a flowchart illustrating example method steps according to an aspect. The method 100 is a method for estimating a traffic instruction at a first area 220. Thus, the method 100 may, for example, be performed by the system 200 of Figure 2 for estimating a traffic instruction of the first area 220. By estimating is meant to determine, predict, understand, i.e. to try to understand the rules or traffic instruction of the area. According to an aspect the first area is one or more of a parking area, an intersection, a road section, a city or part of a city. According to an aspect the first area is an area that corresponds to an area for which road signs is used to define the traffic instructions. According to an aspect the first area is an area that corresponds to an area for which a specific traffic instruction is valid.

The method 100 for estimating an instruction of an area 220 comprises following steps.

Detecting S1 positions and/or movements of at least one vehicle 201 and/or vehicle user 301 in a second area 221 associated with a corresponding traffic instruction as the first area 220. By position is according to an aspect meant the location or position of the at least one vehicle 201 within the first or second area 220, 221 and/or the time that it has been positioned in the position. By position is according to an aspect meant the location or position of the at least vehicle user 301 within second area 220, 221 and/or the time that it has been positioned in the position. By vehicle user 301 is meant a person that in some way is associated with the vehicle, it could be a driver or a passenger. By movement is according to an aspect meant the direction, speed and/or distance that the at least one vehicle 201 moves within the first or second area 220, 221.

The first area 220 is the area for which the traffic instruction should be estimated. The second area 221 is another area that has the same/similar/corresponding traffic instruction as the first area 220. The second area 221 can be located at a distance from and be remote from the first area 221. According to an aspect the first and second areas 220, 221 is a parking area, a block, a zone with a specific radius, a street, a part of a city or a city. According to an aspect the first and second area s 220, 221 are different for different traffic instructions.

According to an aspect the step of detecting S1 comprises scanning S11 the second area 221 by one or more sensors 230. According to an aspect the scanning S11 further comprises scanning S11 by on-board sensors 230 of the vehicle 201 and/or a sensor 230 mounted at the second area 221.

According to an aspect, the vehicle 201 is capable of Vehicle to Cloud (V2C) communication. The V2C technology enables an exchange of information of the vehicle and a further vehicle 202 or information obtained by the vehicle 201 with a cloud system or a cloud service 401. This allows the further vehicle 202 to use information from vehicles 201 that is also capable of V2C communication, trough the common cloud system or cloud service.

The on-board sensors 230 may comprise detectors, cameras, 360-degree radar, LIDAR, ultrasonic sensors or any other vehicle compatible sensor for obtaining information about the environment in proximity of the vehicle 201.

In addition, the vehicle 201 and or further vehicle 202 may comprise an Internet connection, Advanced Driver Assistance Systems and/or high definition maps for more accurate object detection and localization.

The sensor 230 is according to an aspect sensors 230 that are mounted at the second area 221. According to an aspect the sensors 230 are a cloud connected sensor 230. The sensor 230 is according to an aspect a camera that is fixedly connected at the second area 220, 221. According to an aspect the sensor 230 is a camera located at the second area 220, 221 being an intersection or parking place. The sensor 230 could for instance be a surveillance camera at a parking area or a sensor at building in the area 220. The sensors 230 at the first and/or second area may comprise detectors, cameras, 360-degree radar, ultrasonic sensors or any other sensor for obtaining information about the environment in proximity of the first and/or second areas.

According to an aspect the detected movements comprises information regarding one or more of time, date, speed of vehicles and/or vehicle users, position of vehicles and/or vehicle users, number of vehicles, type of vehicle and direction of vehicles and or vehicle users.

According to an aspect the detected movements comprises information regarding one or more of the width, height, type, model and type of tires or the vehicles.

In step S2 a behaviour pattern is determined S2 based on the detected positions and/or movements of the at least one vehicle 201 and/or vehicle user 301.

According to an aspect the step of determine S2 may be performed by big data analytics. Big data analytics is often a complex process of examining large and varied data sets, i.e., big data, to uncover information including hidden patterns, unknown correlations, trends and preferences for making informed decisions or predictions. According to an aspect the big data analytics is performed in a scalable cloud system or cloud service.

In an aspect the step of determining S2 the behaviour pattern based on the detected positions and/or movements of the at least one vehicle 201 and/or vehicle user 301 is determined by a software analysis patterns in software engineering being conceptual models, which capture an abstraction of a situation often encountered in modelling. A behaviour pattern can be represented as a group of related, generic objects (e.g. meta-classes) with stereotypical attributes (e.g. data definitions), behaviours (e.g. method signatures), and expected interactions defined in a domain-neutral manner. By determining and analysing behaviour patterns in the detected information, patterns can be identified and the estimation of the traffic instruction can be based on the identified pattern.

The position of vehicles is according to an aspect meant the relative position between the vehicles 201. The position of vehicles is according to an aspect meant the position of the vehicles on a road. The position of vehicles is according to an aspect meant the position of the vehicles on a parking spot or parking area. The type of vehicle is according to an aspect the size of the vehicle. By knowing the size of the vehicle, the type of vehicle could be identified as a cycle, a motorcycle, a car, a bus, a permobil, a snowmobile and/or a truck. The type of vehicle is according to an aspect the function of a vehicle such as a taxi, an ambulance, a police car, a post or a delivery vehicle. The second area 221 is used to detect more movements for a traffic instruction, such that there are more data available for the step of determining S2. By having more data that are available the determining S2 of behaviour data could be more accurate and also be determined for areas, i.e. the first area 220, for which yet not enough data has been detected to determine a behaviour pattern.

In step S3, a traffic instruction of the first area 220 is estimated based on the determined behaviour pattern determined in step S2.

In step S4, the estimated traffic instructions of the first area 220 is received in the further vehicle 202. The receiving may according to an aspect be performed by a receiving circuitry configured for V2C comprised in the further vehicle. The further vehicle 202 according to an aspect receives the traffic instructions of the first area 220 as the further vehicle 202 is entering or approaching the first area 220, such that an autonomous driving system or driver of the further vehicle 202 obtains/receives information of the estimated traffic instructions and can obey them. According to an aspect the vehicle 201 is a vehicle that is positioned in the first or second area 220,221 and that detects movements. According to an aspect the further vehicle 202 is a vehicle that should use the estimated traffic instructions. According to an aspect the further vehicle 202 is a vehicle 201.

In some embodiments and aspects, the method 100 for estimating an instruction of the area further comprises the following step.

According to an aspect the step of determining S2 comprises analysing S21 the detected positions and/or movements of the at least one vehicle 201 and/or vehicle user 301 in the cloud 401. By analysing the information in the cloud 401 the information could be gathered and analysed in an effective way and each vehicle does not need to have the data power to make the analysis.

According to an aspect the step of estimating S3 the traffic instructions of the first area 220 comprises the step of analysing S31 the determined behaviour pattern in the cloud 401. By analysing the information in the cloud 401 the information could be gathered and analysed in an effective way and each vehicle does not need to have the data power to make the analysis.

According to an aspect the vehicle 201 is a vehicle that is positioned in the second area 221 and that detects movements. According to an aspect the further vehicle 202 is a vehicle that should use the estimated traffic instruction.

In some embodiments and aspects, the method 100 for estimating an instruction of the area further comprises the following step.

Detecting S5 one or more of a road sign, a road, traffic lanes, markings on the road and the step of estimating S3 the traffic instructions is further based on the detected one or more road signs, road, traffic lanes and/or signs on the road. The detected additional information is used as a further input when estimating S3 the traffic instruction. This could reduce the time for estimating or the data power needed. If for instance a road sign is identified as something that has to do with parking instructions, the estimation S3 could focus the estimation on vehicles standing still in the first and/or second area and vehicle users that are moving to and from their vehicles. In another example and if the road sign is identified as regarding a instruction of how the vehicle can move, the estimation S3 could focus on behaviour patterns of moving vehicles. The information of the road sign could be used as input in the analysis of the instructions at the area. If the road sign is identified as being traffic information related to parking information for the area, the step of estimating S3 could start and focus on how long and when vehicles is standing still in the area and spend less analysing power on the speed and direction that vehicles is having in the area. However, if the road sign is identified as being traffic information related to the speed and the direction that the vehicle is allowed to drive, the estimation S3 could start and focus on the speed and direction of vehicles in the second area 221 and spend less analysing power on vehicles standing still in the second area 221.

This could be used to make the estimation S3 more efficient. This could also be used in areas 220 for which the cloud 401 has not yet received enough information to make a complete analysis of the first and/ or second areas 220, 221.

According to an aspect the method 100 comprises the further step of displaying S6 the estimated traffic instruction of the first area 220 in the further vehicle 202.

According to an aspect the method 100 comprises the further step of receiving S7 the estimated traffic instruction of the first area 220 in an autonomous driving system of the further vehicle 202.

According to an aspect the estimated traffic instructions of the first area 220 comprises instructions of one or more of a recommended velocity, a driving direction, a parking instructions, a non driving direction, a allowed type of tyres, a maximum height, maximum weight, bridge opening, pedestrian street, a lane for autonomous driving vehicles, bus lane, carpool lane, no-passing zone, tolls, speeding camera, specific rules for specific lanes to assist the user of the vehicle or the autonomous driving system to obey the traffic instructions of the first area 220.

According to an aspect the method 100 comprises the further step of identifying S8 a first indication/indicator of the traffic instruction associated with the first area 220. According to an aspect the step of identifying S8 the first indication comprises identifying one or more road signs and/or signs on and/or at the road at the first area 220.

According to an aspect the method 100 comprises the further step of comparing S9 the first indication with a second indication of the traffic instruction associated with the second area 221 to determine S10 if the first and second indications are indications of corresponding traffic instructions

According to an aspect, a continuous stream of the detected positions and/or movements of the at least one vehicle 201 and/or vehicle user 301 is sent to the cloud 401 in response to the step of detecting S2 of the area. The continuous stream of detected information may form part of big data to be analysed by a cloud service.

According to an aspect the step of displaying S6 is done by displaying the traffic instruction on a dashboard, in a head-up display or in a Human Machine Interface in the vehicle.

According to an aspect the detecting S1 of movements and/or positions of vehicle user comprise detecting information of the flow of pedestrians in the second area 221.

According to an aspect, an example of the traffic instruction may be that it is allowed to park on a road on weekdays from 8 to 20 and that there is a parking fee. Another example of a traffic instruction is that the speed limit is 80km/h and that not is allowed to stop the vehicle on weekends.

According to an aspect a behaviour pattern in the second area 221 of a road is that the average speed of the vehicles on the road is 83km/h, and one estimation based on this could be that the traffic instruction of the road, i.e. of the first area 220 and/or second area 221, is that the speed limit is 80km/h in the first area 220.

According to an aspect not part of the claimed invention, the behaviour pattern of the first area 220 of a parking place is that the vehicles that stop in an area has an average time of more than 3 minutes from when it stops until it is locked and that almost no vehicle is standing still for more than 2h. An estimation of the traffic instruction of the parking place in this area 220 is based on this pattern and could be that the allowed time to park is 2h and that there is a parking fee.

According to an aspect a behaviour pattern is that there are almost only taxis driving in the second area 221 in weekends. An estimation of the traffic instruction of the first and second areas 220, 221 based on this behaviour pattern could be that the only taxis are allowed on the road on weekends.

According to an aspect the estimated traffic instruction is any instruction that is or could be disclosed on a road sign 305.

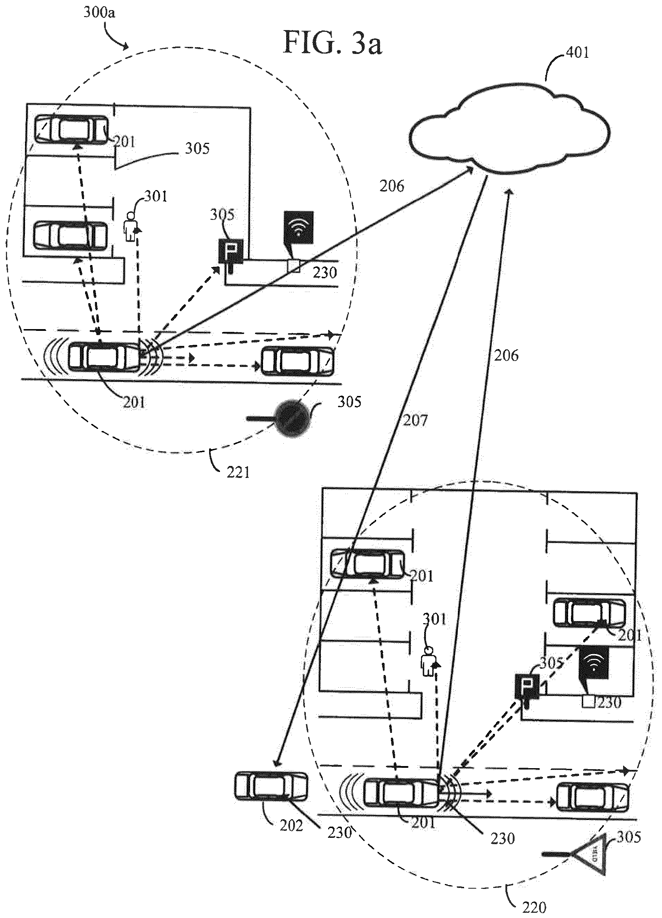

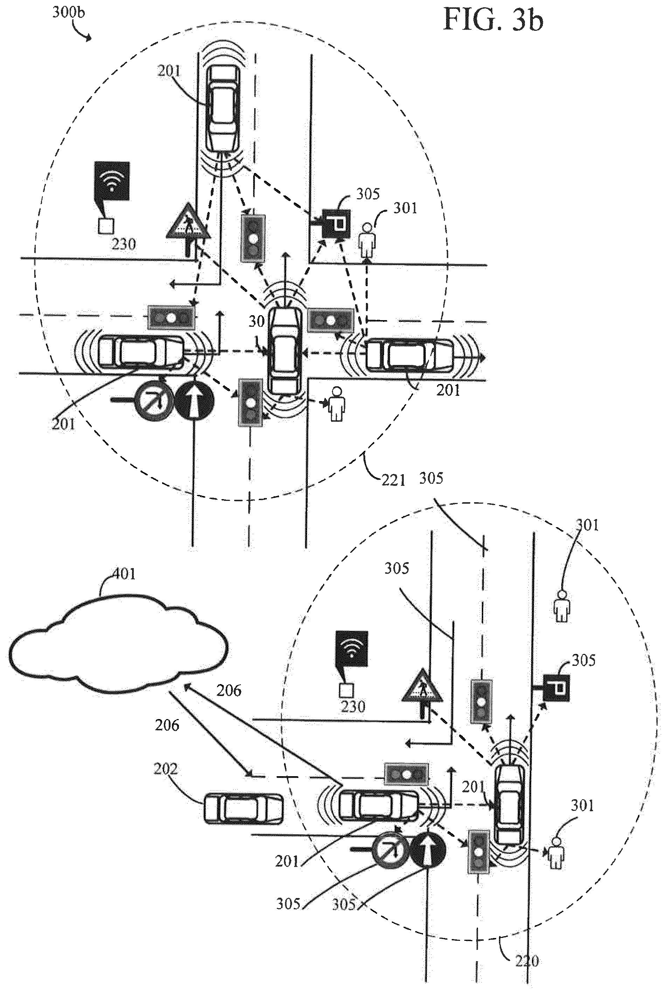

Figure 2 is a schematic overview illustrating an example system according to some aspects and embodiments. The system 200 is for estimating the traffic instructions at the first area 220. Thus, the system 200 may, for example, be utilized for the first area 220 being an environment 300a of Figure 3a and/or for the first area 220 being an environment 300b of Fig 3b.

The vehicle 201 comprises an apparatus for estimating traffic instructions of the first area 220. The apparatus comprises a memory comprising executable instructions, wherein one or more processors are configured to communicate with the memory.

The one or more processors are configured to cause the apparatus to detect S1 positions and/or movements of at least one vehicle 201 and/or vehicle user 301 in a second area 221 associated with a corresponding traffic instruction as the first area 220.

The one or more processors are further configured to cause the apparatus to determining S2 a behaviour pattern based on the detected positions and/or movements of the at least one vehicle 201 and/or vehicle user 301.

The one or more processors are further configured to cause the apparatus to estimating S3 the traffic instructions of the first area 220 based on the determined behaviour pattern.

The vehicle 201 scans, i.e., detects, the environment in proximity of the vehicle 201, e.g. lane markings, other vehicles in other lanes or in the same lane, pedestrians, cyclists, road signs 305, the intersection, the traffic lights and their current states using the on-board sensors which may comprise e.g. detectors, cameras, 360-degree radar, LIDAR, ultrasonic sensors or any other vehicle compatible sensor for obtaining information about the environment in proximity of the vehicle.

The vehicle 201 according to an aspect comprises a cloud connection or an Internet connection, Advanced Driver Assistance Systems and high definition maps for more accurate object detection and localization.

The vehicle 201 according to an aspect send a continuous stream of detected positions and/or movements of at least one vehicle 201 and/or vehicle user 301 in the second area 221 obtained by the on-board sensors, as described above, to the cloud 401 for determining and estimation.

The sensors 230 mounted at the area scans, i.e. detects, the environment in proximity of the second area 221, e.g. lane markings, vehicles in different lanes pedestrians, cyclists, road signs 305, the intersection, the traffic lights and their current states. The sensor 230 may comprise e.g. detectors, cameras, 360-degree radar, ultrasonic sensors or any other compatible sensor for obtaining information about the environment in proximity of the area.

The sensor 230 at the second area 221 may send a continuous stream of information obtained by the sensors, as described above, to the cloud 401 for determination and estimation.

The cloud 401 comprises according to an aspect at least one cloud database 404 and/or at least one server database 403 which are databases that typically run on a cloud computing platform and access to it is provided as a service. The database services may provide scalability and high availability of the database. The cloud 401 may be comprised in a one separate cloud service 401 or in a plurality of associated cloud services 401.

In the cloud 401, machine learning algorithms create a model capable of estimating the traffic instructions for the area, e.g. an instruction, based on input parameters, i.e., detected positions and/or movements of at least one vehicle 201 and/or vehicle user 301 in the second area 221, such as where other vehicles are detected in relation to the vehicle 201 and how many other vehicles there are, which vehicles are currently driving and at which speed and direction, a road sign, the type of vehicle, the time between parking and locking the vehicle, time of day, pedestrians at crosswalks (waiting or walking) and how many pedestrians there are etc..

The cloud 401 can then provide the vehicle 201 or the further vehicle 202 approaching or entering the first area 220 with the estimated traffic instructions of the first area 220, so that the further vehicle 202 is able to adapt to obey the traffic instructions for the first area 220. According to an aspect the traffic instructions could be any traffic instructions that is disclosed by a road sign. According to an aspect the instruction is one or more of a speed limit, a driving direction, a parking instructions, a non-driving direction, a maximum height, a maximum weight, a bridge opening, a maximum parking time, environmental zone, the type of tires allowed, pedestrian street, bus lane, a carpool lane, no-passing zone, tolls, speeding camera, specific rules for specific lanes to assist the user of the vehicle to obey the traffic rules. According to an aspect the instructions could be any instruction that is valid for the first area 220 and that could be identified by analyzing the positions and/or movements of at least one vehicle 201 and/or vehicle user 301 in the first area 220 or in the second area 221.

The cloud 401 receives a continuous stream of detected information 206 of an environment, e.g. the second area 221, obtained from the on-board sensors from the vehicle 201 and/or from the sensors 230 at the second area 221.

The cloud 401 analyses the scanning information in response to reception of the stream of detected positions and/or movements. The cloud 401 predicts/estimated the traffic instructions of the first area 220 based on the determined behaviour pattern of the detected information in the second area 221.

The cloud 401 may predict the traffic instructions of the first area 220 based on the scanning information obtained from the vehicle 201 and from scanning information obtained by other vehicles of which scanning information may be comprised in the databases 203,204. The cloud 401 may predict the traffic instructions of the area 220 based on the scanning information obtained from the one or more sensors 230 detecting information. The cloud 401 may estimate the traffic instructions of the first area 220 based on the detected information obtained from the vehicle 201 and from scanning information obtained by other vehicles and the sensors 230 mounted at the area of which scanning information may be comprised in the databases 203,204. According to an aspect the cloud 401 sends a stream of information comprising the estimated traffic instruction of the area 220 to the further vehicle 202, as is disclosed in fig 3a and 3b.

More specifically, according to an aspect the determining of the information is performed by a machine learning algorithm, which creates a model of the first area 220 and the second area 221, which is continuously improved, i.e. trained, as long as new information becomes available. Until the model is fully trained, a more rudimentary model could be used. An example of this may be that the method is capable of estimating the traffic instructions based on a combination of identifying known road signs in combination with input from the vehicle 201 and/or the cloud connected sensors 230 mounted at the second area 221. A rudimentary model in this case is to just assume that is OK to park in an area where there is a parking sign, even though it might lead to a mistake if there are additional information on the sign that yet not can be predicted. This information can for instance be used to roughly estimate a recommended vehicle speed, where to stop etc. for other cloud connected vehicles. The time for the model to be fully trained for the first area 220 is however reduced as the model in addition to information from the first area 220 is based on information from the second area 221.

The method provides the estimated traffic instructions of the first area 220 to the further vehicle 202 as it is approaching or entering the first area 220.

In some embodiments, the further vehicle 202 may further receive a recommended velocity, driving direction, parking instructions, non-driving direction, a maximum height, maximum weight, bridge opening, pedestrian street, bus lane, HOV (carpool) lane, no-passing zone, tolls, speeding camera, specific rules for specific lanes to assist the user of the further vehicle 202 or to assist an autonomous driving system of the further vehicle 202 to obey the traffic rules.

In some embodiments, the further vehicle 202 may further display the predicted instruction to assist the further vehicle 202 to obey the traffic rules at the first area of the one or more road signs 305.

Figure 3a is a schematic drawing illustrating an example environment according to some embodiments. The road sign instruction prediction system 200 illustrated in Figure 2 may, for example, be utilized for an environment 300a of Figure 3a.

Figure 3a illustrates two environments, i.e. the first and the second areas 220, 221, comprising a plurality of vehicles 201 driving on a road towards the first or second area 220, 221 with sensors 230 and with a road signs 305. In this example, the environments each comprises a road that passes a parking area. The first and the second areas 220, 221 does not need to be exactly the same, however, some of the traffic instructions for the first area 220 should be the same as some of the traffic instructions in the second area 221. In the two environments in fig 3a the traffic instructions regarding how and when it is allowed to park in the parking lot in the first area 220 is the same as the traffic instructions regarding how and when it is allowed to park in the parking lot in the second area 221. According to an aspect the corresponding traffic instructions regarding the parking could be identified by that the parking signs 305 are the same.

The further vehicle 202 approaching or entering the first area 220 receives or obtains an estimation of the traffic instructions of the first area 220. According to an aspect the instructions is an estimated traffic instruction of where it is allowed to park and where it is not allowed to park. According to an aspect this could be estimated based on where different vehicles stands still and for how long they stand still.

According to an aspect the estimated instruction comprise instructions of if there are any fees for parking, such that the further vehicle 202 does not violate the parking rules of the first area. According to an aspect this could be predicted based on the time from which the vehicle is stopped until it is locked, i.e. that it takes time for the user of the vehicle to walk to the parking meter, pay the fees and walk back. According to an aspect this could be estimated based on if the vehicle uses a parking fee app or not.

According to an aspect the estimated instruction comprises instructions of for how long it is allowed to park at the parking area/lot, i.e. in the first area 220. According to an aspect the estimated instruction comprises instructions of at which days of the week it is allowed to park. According to an aspect this could be estimated based on when different vehicles stands still, for how long they stands still and if there are differences in the pattern between different days of the week and month.

According to an aspect the estimated instructions comprises instructions of if one needs to have a special sticker or information in the car to fulfil the rules. The further vehicle 202 is further configured to display the received estimated instruction such that a user of the further vehicle 202 can see the traffic instructions.

According to an aspect the further vehicle 202 is further configured to input the received estimated instruction to a driving assisting system of the further vehicle 202.

The estimated instructions of the one or more road signs may also comprises a mix of parking instructions and traffic instructions depending on the traffic instructions of the first area and the road signs that are present at the first area.

Figure 3b is a schematic drawing illustrating an example environment according to some embodiments. The road sign instruction estimation system 200 illustrated in Figure 2 may, for example, be utilized for an environment 300b of Figure 3b.

Figure 3b illustrates two environment, i.e. the first and the second areas 220,221, comprising a plurality of vehicles 201 driving towards/through/leaving the environments, i.e. the first or second areas 220,221, with one or more road signs 305 in different directions. In this example, the first or second area 220, 221 comprises an intersection of two roads. The first area 220 does not need to be exactly the same as the second area 221, however, some of the traffic instructions in the first area 220 should be the same as some of the traffic instructions in the second area 221. In the illustrated environment the traffic instructions regarding how it is allowed to turn in the intersections is the same in the first and the second areas 220,211. The corresponding traffic instructions could according to an aspect be identified by that the same road signs 305 are located at the intersection and/or that the same markings 305 are located in the road. Information from the first and second areas 220, 221 regarding traffic instructions that not is the same in both the areas 220, 221 could be used as input when estimating a traffic instruction in a further are that has the same traffic instruction. The first or second area 220, 221 comprises two sensors 230 mounted at the first and the second area 220, 221. The sensors 230 could be mounted on a lamppost, a parking meter, a road sign or a building at the area.

When the vehicle 201 approaches the first area 220 or the second area 221 comprising the intersection, the vehicle 201 scans, i.e., monitors, the state of the traffic light for each direction, senses or approximates the number of other vehicles in its proximity with respect to the intersection, senses the speed and direction of the vehicles, senses the type of vehicle and senses any pedestrians next to the road or crossing the road, including their position.

The sensor(s) 230 at the first and second areas 220, 221 of the intersection, also scans the respective areas 220, 221, i.e., monitors, the state of the traffic lights for each direction, senses or approximates the number of other vehicles in its proximity with respect to the intersection, senses the speed and direction of the vehicles, senses the type of vehicle and senses any pedestrians next to the road or crossing the road, including their position.

Further, the vehicles 201 and/or sensors 230 mounted at the area may sense pictures and or text on the road or on the road signs 305, indicating e.g. a lane direction, or any other relevant signs for modelling a traffic pattern at the area at one or more road signs, e.g. yield signs such as OK to turn at red etc.

The vehicle 201 according to an aspect continuously sends the detected information to the cloud 401. The vehicle 201 may alternatively send the scanning information to the cloud 401 at specifically determined points in time or at regular time intervals e.g. each 5 seconds.

The cloud connected sensors 230 according to an aspect continuously send the scanning information to the cloud 401. The sensors 230 may alternatively send the scanning information to the cloud 401 at specifically determined points in time or at regular time intervals e.g. each 5 seconds

When the vehicle 201 reaches the intersection with the road signs 305 and when driving through the first or second area 220,221, the vehicle 201 continuously senses or approximate the number of other vehicles, and their locations at the intersection as well as other vehicles driving through the area including their position, direction and vehicle speed. Also all visible road signs 305 and traffic lights are sensed around the vehicle 201.

Further, the vehicle 201 identifies pedestrians next to the road or crossing the road, including their position.

When the vehicle 201 leaves the area, the vehicle 201 senses the number of oncoming vehicles i.e. vehicles that are about to enter the area, senses the traffic flows behind the vehicle (e.g. using rearward facing vision sensors).

The vehicle 201 according to an aspect continuously sends the scanning information to the cloud 401 until e.g. 200 meters after the intersection or until end of sight.

The further vehicle 202 approaching or entering the first area 220 receives or obtains the estimated traffic instructions of the first area 220 from the cloud 401 e.g. an instruction for the further vehicle 202 to follow such that further vehicle 202 obey the traffic rules at the first area 220. According to an aspect the further vehicle 202 is configured to display the received estimated traffic instruction in the further vehicle such that a user of the further vehicle 202 obtains and could follow the traffic rules at the first area 220. According to an aspect the further vehicle 221 are further configured to use the received estimated traffic instruction as input to an autonomous drive system or navigation system of the further vehicle 202, such that the further vehicle 202 follows the traffic rules at the first area 220.

The estimated traffic instructions according to an aspect comprises the speed limit in the main road and on the crossroads. According to an aspect this could be estimated based on the speed of the different vehicles.

According to an aspect the estimated instruction comprises information of which roads in the intersection that is it is allowed to drive into. This could for instance be predicted or estimated based on the traffic flow and if vehicles has turned into the different roads.

According to an aspect the estimated instructions comprises information of when and where it is allowed to stop and for how long it is allowed to stop.

According to an aspect the estimated instructions comprises information of that a lane is a taxi lane or a lane for a specific type of vehicle. According to an aspect this is based on a pattern of that only a specific type of vehicle is driving in a specific lane.

According to an aspect the different instructions for the area of the intersection is based on the pattern of vehicles that has passed the intersection.

According to an aspect the first area 220 is a continuous first area 220. According to an aspect the first area 220 is a continuous first area 220 surrounding the further vehicle 202.

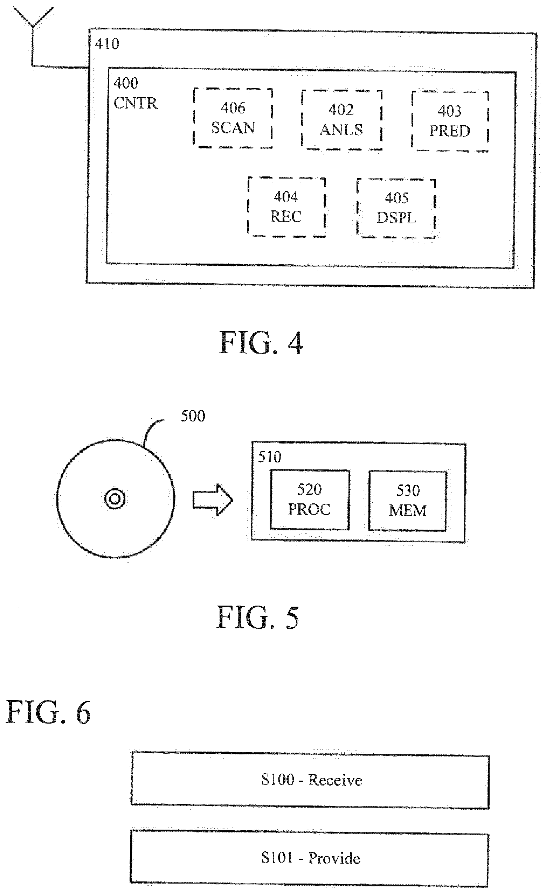

Figure 4 is a schematic block diagram illustrating an example arrangement according to some aspects. The example arrangement is a pattern detection arrangement 410 for detecting patterns in traffic flow behaviours of the second area 221 to estimate the traffic instructions of the first area 220.

The pattern detection arrangement 410 comprises controlling circuitry CNTR 400, which may in turn comprise a scanning arrangement SCAN 406, e.g. scanning circuitry, configured to scan or monitor the second area 221, an analysing arrangement ANLS 402, e.g. analysing circuitry, configured to analyse the scanning information, an estimation arrangement PRED 403, e.g. estimation circuitry, configured to estimate an instruction of the area, a receiving arrangement REC 404, e.g. receiving circuitry, configured to receive the estimated instruction on the area, and a display arrangement DSPL 405, e.g. display circuitry, configured to display the received estimated instructions.

The pattern detection arrangement 410 may be comprised in the pattern detection system 200 described in connection with Figure 2 and/or the pattern detection arrangement 410 may be configured to perform method steps of any of the methods described in connection with Figure 1.

Figure 5 is a schematic drawing illustrating an example computer readable medium according to some aspects. The computer program product comprises a non-transitory computer readable medium 500 having thereon a computer program 510 comprising program instructions, wherein the computer program being loadable into a data processing unit and configured to cause execution of the method steps of any of the methods described in connection with Figure 1.

According to some embodiments, the computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in an apparatus or vehicle 201,202. When loaded into the data processing unit, the computer program may be stored in a memory (MEM) 530 associated with or comprised in the data-processing unit. According to an aspect, the computer program may, when loaded into and run by the data processing unit, cause execution of method steps according to, for example, any of the methods illustrated in Figure 1 or otherwise described herein.

According to an aspect, and as is disclosed in figure 6, the cloud service 401 for estimating a traffic instruction of a first area 220 comprises controlling circuitry configured to: receive S100 detected S1 positions and/or movements of at least one vehicle 201 and/or vehicle user 301 in the second area 221 associated with a corresponding traffic instruction as the first area 220, determining S2 a behaviour pattern based on the detected positions and/or movements of the at least one vehicle 201 and/or vehicle user 301, and estimating S3 the traffic instructions of the first area 220 based on the determined behaviour pattern. According to an aspect the controlling circuitry of the cloud service is further configured to provide S101 a recommended velocity, driving direction, a parking instruction, non-driving direction, a maximum height, maximum weight, bridge opening, pedestrian street, bus lane, carpool lane, no-passing zone, tolls, speeding camera, and specific rules for specific lanes to a user of a vehicle or an autonomous driving vehicle to assist to obey the traffic instructions of the first area 220. Generally, when an arrangement is referred to herein, it is to be understood as a physical product; e.g., an apparatus. The physical product may comprise one or more parts, such as controlling circuitry in the form of one or more controllers, one or more processors, or the like. The described embodiments and aspect and their equivalents may be realized in software, hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments and aspects may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments and aspect, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method (100) for estimating a traffic rule at a first area (220), wherein the first area (220) is a parking area, wherein the estimated traffic rule of the first area (220) comprises a parking instruction, the method comprising the steps of:
- detecting (S1) positions and/or movements of at least one vehicle (201) in a second area (221) associated with a corresponding traffic rule as the first area (220), wherein the second area (221) is a parking area, wherein the detected positions and/or movements comprises information regarding one or more of time, date and position of the at least one vehicle (201),
- determining (S2) a behaviour pattern based on the detected positions and/or movements of the at least one vehicle (201) in the second area (221), and
- estimating (S3) the parking instruction of the first area (220) based on the determined behaviour pattern, wherein the behaviour pattern is estimated based on how long and when the at least one vehicle (201) is standing still in the second area (221).

2. The method (100) according to claim 1, wherein the method comprises the step of receiving (S4) the estimated parking instruction of the first area (220) in a further vehicle (202) entering the first area (220).

3. The method (100) according to claim 1 or 2, wherein the step of detecting (S1) comprises scanning (S11) the second area (221) by one or more sensors (230).

4. The method (100) according to any of the preceding claims, wherein the step of determining (S2) comprises analysing (S21) the detected positions and/or movements of the at least one vehicle (201) in the cloud (401).

5. The method (100) according to any of the preceding claims, wherein the step of estimating (S3) the parking instruction of the first area (220) comprises the step of analysing (S31) the determined behaviour pattern in the cloud (401).

6. The method (100) according to any of the preceding claims, wherein the method further comprises detecting (S5) one or more of a road sign (305), a road, traffic lanes (305), markings on the road (305) and the step of estimating (S3) the parking instruction is further based on the detected one or more road signs, road, traffic lanes and/or signs on the road.

7. The method (100) according to claim 2 and any of claims 3 to 6, further comprising the step of: displaying (S6) the estimated parking instruction of the first area (220) in the further vehicle (202).

8. The method (100) according to claim 7, further comprising the step of:
receiving (S7) the estimated parking instruction of the first area (220) in an autonomous driving system of the further vehicle (202).

9. A computer program product comprising a non-transitory computer readable medium (500), having thereon a computer program (510) comprising program instructions, the computer program being loadable into a data processing unit and configured to cause execution of the method according to any of claims 1 to 8 when the computer program is run by the data processing unit.

10. An apparatus for estimating a traffic rule at a first area (220), wherein the first area (220) is a parking area, wherein the estimated traffic rule of the first area (220) comprises a parking instruction, wherein the apparatus comprises:
a memory comprising executable instructions and one or more processors configured to communicate with the memory wherein the one or more processors are configured to cause the apparatus to:
- detecting (S1) positions and/or movements of at least one vehicle (201) in a second area (221) associated with a corresponding traffic rule as the first area (220), wherein the second area (221) is a parking area, wherein the detected positions and/or movements comprises information regarding one or more of time, date and position of the at least one vehicle (201),
- determining (S2) a behaviour pattern based on the detected positions and/or movements of the at least one vehicle (201) in the second area (221), and
- estimating (S3) the parking instruction of the first area (220) based on the determined behaviour pattern, wherein the behaviour pattern is estimated based on how long and when the at least one vehicle (201) is standing still in the second area (221).

11. A vehicle (201, 202) comprising the apparatus according to claim 10.

12. A cloud service (401) for estimating a traffic rule of a first area (220), wherein the first area (220) is a parking area, wherein the estimated traffic rule of the first area (220) comprises a parking instruction, wherein the cloud service comprises controlling circuitry configured to:
- receive (S100) detected (S1) positions and/or movements of at least one vehicle (201) in a second area (221) associated with a corresponding traffic rule as the first area (220), wherein the second area (221) is a parking area, wherein the detected positions and/or movements comprises information regarding one or more of time, date and position of the at least one vehicle (201),
- determining (S2) a behaviour pattern based on the detected positions and/or movements of the at least one vehicle (201) in the second area (221), and
- estimating (S3) the parking instruction of the first area (220) based on the determined behaviour pattern, wherein the behaviour pattern is estimated based on how long and when the at least one vehicle (201) is standing still in the second area (221).

## Patentansprüche

1. Verfahren (100) zum Schätzen einer Verkehrsregel in einem ersten Bereich (220), wobei der erste Bereich (220) ein Parkbereich ist, wobei die geschätzte Verkehrsregel des ersten Bereichs (220) eine Parkanweisung umfasst, wobei das Verfahren die folgenden Schritte umfasst:
- Detektieren (S1) von Positionen und/oder Bewegungen von mindestens einem Fahrzeug (201) in einem zweiten Bereich (221), der einer Verkehrsregel zugeordnet ist, die der des ersten Bereichs (220) entspricht, wobei der zweite Bereich (221) ein Parkbereich ist, wobei die detektierten Positionen und/oder Bewegungen Informationen bezüglich einem oder mehreren von Zeit, Datum und Position des mindestens einen Fahrzeugs (201) umfassen,
- Bestimmen (S2) eines Verhaltensmusters basierend auf den detektierten Positionen und/oder Bewegungen des mindestens einen Fahrzeugs (201) in dem zweiten Bereich (221) und
- Schätzen (S3) der Parkanweisung des ersten Bereichs (220) basierend auf dem bestimmten Verhaltensmuster, wobei das Verhaltensmuster basierend darauf geschätzt wird, wie lange und wann das mindestens eine Fahrzeug (201) in dem zweiten Bereich (221) stillsteht.

2. Verfahren (100) nach Anspruch 1, wobei das Verfahren den Schritt Empfangen (S4) der geschätzten Parkanweisung des ersten Bereichs (220) in einem weiteren Fahrzeug (202), das in den ersten Bereich (220) einfährt, umfasst.

3. Verfahren (100) nach Anspruch 1 oder 2, wobei der Schritt des Detektierens (S1) Scannen (S11) des zweiten Bereichs (221) durch einen oder mehrere Sensoren (230) umfasst.

4. Verfahren (100) nach einem der vorhergehenden Ansprüche, wobei der Schritt des Bestimmens (S2) Analysieren (S21) der detektierten Positionen und/oder Bewegungen des mindestens einen Fahrzeugs (201) in der Cloud (401) umfasst.

5. Verfahren (100) nach einem der vorhergehenden Ansprüche, wobei der Schritt des Schätzens (S3) der Parkanweisung des ersten Bereichs (220) den Schritt Analysieren (S31) des bestimmten Verhaltensmusters in der Cloud (401) umfasst.

6. Verfahren (100) nach einem der vorhergehenden Ansprüche, wobei das Verfahren ferner Detektieren (S5) von einem oder mehreren eines Verkehrszeichens (305), einer Straße, Fahrspuren (305) und Straßenmarkierungen (305) umfasst und der Schritt des Schätzens (S3) der Parkanweisung ferner auf dem detektierten einen oder mehreren Verkehrszeichen, Straßen, Fahrspuren und/oder Zeichen auf der Straße basiert.

7. Verfahren (100) nach Anspruch 2 und einem der Ansprüche 3 bis 6, ferner umfassend den folgenden Schritt: Anzeigen (S6) der geschätzten Parkanweisung des ersten Bereichs (220) in dem weiteren Fahrzeug (202).

8. Verfahren (100) nach Anspruch 7, ferner umfassend den folgenden Schritt:
Empfangen (S7) der geschätzten Parkanweisung des ersten Bereichs (220) in einem autonomen Fahrsystem des weiteren Fahrzeugs (202).

9. Computerprogrammprodukt, umfassend ein nicht-flüchtiges computerlesbares Medium (500), das ein darauf gespeichertes Computerprogramm (510) aufweist, das Programmanweisungen umfasst, wobei das Computerprogramm in eine Datenverarbeitungseinheit geladen werden kann und dazu konfiguriert ist, eine Durchführung des Verfahrens nach einem der Ansprüche 1 bis 8 zu veranlassen, wenn das Computerprogramm von der Datenverarbeitungseinheit ausgeführt wird.

10. Vorrichtung zum Schätzen einer Verkehrsregel in einem ersten Bereich (220), wobei der erste Bereich (220) ein Parkbereich ist, wobei die geschätzte Verkehrsregel des ersten Bereichs (220) eine Parkanweisung umfasst, wobei die Vorrichtung Folgendes umfasst:
einen Speicher, umfassend durchführbare Anweisungen, und einen oder mehrere Prozessoren, die dazu konfiguriert sind, mit dem Speicher zu kommunizieren, wobei der eine oder die mehreren Prozessoren dazu konfiguriert sind, die Vorrichtung zu Folgendem zu veranlassen:
- Detektieren (S1) von Positionen und/oder Bewegungen von mindestens einem Fahrzeug (201) in einem zweiten Bereich (221), der einer Verkehrsregel zugeordnet ist, die der des ersten Bereichs (220) entspricht, wobei der zweite Bereich (221) ein Parkbereich ist, wobei die detektierten Positionen und/oder Bewegungen Informationen bezüglich einem oder mehreren von Zeit, Datum und Position des mindestens einen Fahrzeugs (201) umfassen,
- Bestimmen (S2) eines Verhaltensmusters basierend auf den detektierten Positionen und/oder Bewegungen des mindestens einen Fahrzeugs (201) in dem zweiten Bereich (221) und
- Schätzen (S3) der Parkanweisung des ersten Bereichs (220) basierend auf dem bestimmten Verhaltensmuster, wobei das Verhaltensmuster basierend darauf geschätzt wird, wie lange und wann das mindestens eine Fahrzeug (201) in dem zweiten Bereich (221) stillsteht.

11. Fahrzeug (201, 202), umfassend die Vorrichtung nach Anspruch 10.

12. Cloud-Dienst (401) zum Schätzen einer Verkehrsregel für einen ersten Bereich (220), wobei der erste Bereich (220) ein Parkbereich ist, wobei die geschätzte Verkehrsregel des ersten Bereichs (220) eine Parkanweisung umfasst, wobei der Cloud-Dienst einen Steuerschaltkreis umfasst, der zu Folgendem konfiguriert ist:
- Empfangen (S100) detektierter (S1) Positionen und/oder Bewegungen des mindestens einen Fahrzeugs (201) in einem zweiten Bereich (221), der einer Verkehrsregel zugeordnet ist, die der des ersten Bereichs (220) entspricht, wobei der zweite Bereich (221) ein Parkbereich ist, wobei die detektierten Positionen und/oder Bewegungen Informationen bezüglich einem oder mehreren von Zeit, Datum und Position des mindestens einen Fahrzeugs (201) umfassen,
- Bestimmen (S2) eines Verhaltensmusters basierend auf den detektierten Positionen und/oder Bewegungen des mindestens einen Fahrzeugs (201) in dem zweiten Bereich (221) und
- Schätzen (S3) der Parkanweisung des ersten Bereichs (220) basierend auf dem bestimmten Verhaltensmuster, wobei das Verhaltensmuster basierend darauf geschätzt wird, wie lange und wann das mindestens eine Fahrzeug (201) in dem zweiten Bereich (221) stillsteht.

## Revendications

1. Procédé (100) permettant d'estimer une règle de circulation dans une première zone (220), la première zone (220) étant une zone de stationnement, la règle de circulation estimée de la première zone (220) comprenant une instruction de stationnement, le procédé comprenant les étapes consistant à :
- détecter (S1) des positions et/ou des mouvements **d'au** moins un véhicule (201) dans une seconde zone (221) associée à une règle de circulation correspondante en tant que première zone (220), la seconde zone (221) étant une zone de stationnement, les positions et/ou mouvements détectés comprenant des informations concernant un ou plusieurs parmi le temps, la date et la position de l'au moins un véhicule (201),
- déterminer (S2) un modèle de comportement sur la base des positions et/ou mouvements détectés de l'au moins un véhicule (201) dans la seconde zone (221), et
- estimer (S3) l'instruction de stationnement de la première zone (220) sur la base du modèle de comportement déterminé, le modèle de comportement étant estimé en fonction de la durée et du moment où de l'au moins un véhicule (201) est immobilisé dans la seconde zone (221).

2. Procédé (100) selon la revendication 1, dans lequel le procédé comprend l'étape consistant à recevoir (S4) l'instruction de stationnement estimée de la première zone (220) dans un autre véhicule (202) entrant dans la première zone (220).

3. Procédé (100) selon la revendication 1 ou 2, dans lequel l'étape de détection (S1) comprend le balayage (S11) de la seconde zone (221) par un ou plusieurs capteurs (230).

4. Procédé (100) selon l'une quelconque des revendications précédentes, dans lequel l'étape de détermination (S2) comprend l'analyse (S21) des positions et/ou des mouvements détectés de l'au moins un véhicule (201) dans le nuage (401).

5. Procédé (100) selon l'une quelconque des revendications précédentes, dans lequel l'étape d'estimation (S3) de l'instruction de stationnement de la première zone (220) comprend l'étape d'analyse (S31) du modèle de comportement déterminé dans le nuage (401).

6. Procédé (100) selon l'une quelconque des revendications précédentes, dans lequel le procédé comprend en outre la détection (S5) d'un ou plusieurs parmi un panneau routier (305), une route, des voies de circulation (305), des marquages sur la route (305) et l'étape d'estimation (S3) de l'instruction de stationnement est en outre basée sur les un ou plusieurs panneaux routiers, la route, les voies de circulation et/ou les panneaux sur la route détectés.

7. Procédé (100) selon la revendication 2 et l'une quelconque des revendications 3 à 6, comprenant en outre l'étape consistant à : afficher (S6) l'instruction de stationnement estimée de la première zone (220) dans l'autre véhicule (202).

8. Procédé (100) selon la revendication 7, comprenant en outre l'étape consistant à :
recevoir (S7) l'instruction de stationnement estimée de la première zone (220) dans un système de conduite autonome de l'autre véhicule (202).

9. Produit de programme informatique comprenant un support lisible par ordinateur non transitoire (500), sur lequel se trouve un programme informatique (510) comprenant des instructions de programme, le programme informatique pouvant être chargé dans une unité de traitement de données et configuré pour provoquer l'exécution du procédé selon l'une quelconque des revendications 1 à 8 lorsque le programme informatique est exécuté par l'unité de traitement de données.

10. Appareil permettant d'estimer une règle de circulation dans une première zone (220), la première zone (220) étant une zone de stationnement, la règle de circulation estimée de la première zone (220) comprenant une instruction de stationnement, l'appareil comprenant :
une mémoire comprenant des instructions exécutables et un ou plusieurs processeurs configurés pour communiquer avec la mémoire, les un ou plusieurs processeurs étant configurés pour amener l'appareil à :
- détecter (S1) des positions et/ou des mouvements d'au moins un véhicule (201) dans une seconde zone (221) associée à une règle de circulation correspondante en tant que première zone (220), la seconde zone (221) étant une zone de stationnement, les positions et/ou mouvements détectés comprenant des informations concernant un ou plusieurs parmi un temps, une date et une position des un ou plusieurs véhicules (201),
- déterminer (S2) un modèle de comportement basé sur les positions et/ou mouvements détectés des un ou plusieurs véhicules (201) dans la seconde zone (221), et
- estimer (S3) l'instruction de stationnement de la première zone (220) sur la base du modèle de comportement déterminé, le modèle de comportement étant estimé sur la base de la durée et du moment où les un ou plusieurs véhicules (201) sont immobilisés dans la seconde zone (221).

11. Véhicule (201, 202) comprenant l'appareil selon la revendication 10.

12. Service en nuage (401) pour estimer une règle de circulation d'une première zone (220), la première zone (220) étant une zone de stationnement, la règle de circulation estimée de la première zone (220) comprenant une instruction de stationnement, le service en nuage comprenant un circuit de commande configuré pour :
- recevoir (S100) des positions et/ou des mouvements détectés (S1) d'au moins un véhicule (201) dans une seconde zone (221) associée à une règle de circulation correspondante en tant que première zone (220), la seconde zone (221) étant une zone de stationnement, les positions et/ou les mouvements détectés comprenant des informations concernant un ou plusieurs parmi le temps, la date et la position des un ou plusieurs véhicules (201),
- déterminer (S2) un modèle de comportement sur la base des positions et/ou des mouvements détectés des un ou plusieurs véhicules (201) dans la seconde zone (221), et
- estimer (S3) l'instruction de stationnement de la première zone (220) sur la base du modèle de comportement déterminé, le modèle de comportement étant estimé sur la base de la durée et du moment où les un ou plusieurs véhicules (201) sont immobilisés dans la seconde zone (221).
